# EUROPÄISCHE PATENTSCHRIFT

(11) **EP 3 331 700 B1**
(45) Veröffentlichungstag und Bekanntmachung des Hinweises auf die Patenterteilung: **06.09.2023**
(21) Anmeldenummer: 16750130.3
(22) Anmeldetag: 29.07.2016
(51) Int. Cl.: B32B 18/00, C04B 37/00, G01L 9/00

(54) **VERFAHREN ZUR HERSTELLUNG EINES BAUTEILS AUS KERAMISCHEN WERKSTOFFEN**
METHOD TO PRODUCE A CERAMIC ELEMENT
METHODE POUR PRODUIRE UN ELEMENT EN CERAMIQUE

(30) Priorität: 06.08.2015 DE 102015214997
(43) Veröffentlichungstag der Anmeldung: 13.06.2018
(73) Patentinhaber: Fraunhofer-Gesellschaft zur Förderung der angewandten Forschung e.V., 80686 München (DE); All-Impex GmbH, 01458 Ottendorf-Okrilla (DE)
(72) Erfinder: PARTSCH, Uwe, 01277 Dresden (DE); GOLDBERG, Adrian, 01259 Dresden (DE); ZIESCHE, Steffen, 01159 Dresden (DE); MANHICA, Birgit, 01277 Dresden (DE); LOHRBERG, Carolin, 01277 Dresden (DE); DÜRFELD, Wolfgang, 01156 Dresden (DE); ARNDT, Dietmar, 01454 Radeberg / OT Liegau-Augustusbad (DE); KERN, Wolfram, 01324 Dresden (DE)
(74) Vertreter: Pfenning, Meinig & Partner mbB
(86) Internationale Anmeldenummer: PCT/EP2016/068123
(87) Internationale Veröffentlichungsnummer: WO 2017/021291

(56) Entgegenhaltungen:
- WO-A1-2013/030064
- US-B1- 7 494 557

## Beschreibung

Die Erfindung betrifft ein Verfahren zur Herstellung eines Bauteils aus keramischen Werkstoffen.

Die keramische Multilayertechnik hat die Realisierung mehrlagiger keramischer Komponenten und Mikrosysteme zum Ziel. Neben dem Aufbau keramischer Komponenten durch die Nutzung einfacher Wiederholeinheiten, z.B. gleicher keramischer Einzelfolien mit Flächenelektroden, für Multilayerkondensatoren und Stapelaktoren können auf Multilayern basierende Komponenten auch sehr komplexe 3D-Aufbauten darstellen. Anwendungsgebiete hierfür sind z.B. Sensorik, Automotive, Telekommunikation sowie Medizin- und Biotechnik. In den genannten Anwendungen werden als Basisfolien LTCC (Low Temperature Cofired Ceramics, Sinterung bei T < 1000 °C) und HTCC (High Temperature Cofired Ceramics; Sinterung bei T > 1000 °C) verwendet.

Allen Applikationen gemein ist der Aufbau der Multilayerkomponenten nach einem feststehenden Prozess. Nach dem Zuschnitt der grünen, d.h. ungesinterten Einzelfolien können Durchkontaktierungsöffnungen von Schicht zu Schicht (Vias) und eventuell weitere benötigter Öffnungen für Kavitäten ausgebildet werden. Danach erfolgen das Metallisieren der Vias mittels Schablonendruckprozess sowie das Bedrucken der Einzelfolien mit den benötigten funktionellen Strukturen, wie z.B. Leiterbahnen oder elektrische Widerstände. Anschließende Prozessschritte sind das Stapeln der so hergestellten Einzelfolien sowie deren Verpressen bei erhöhter Temperatur (70 °C - 90 °C). Beim anschließenden Cofiring, d.h. dem gemeinsamen Einbrand der in der Multilayerkomponente enthaltenen Werkstoffe, wird der Multilayeraufbau verdichtet und erhält die benötigten funktionellen Eigenschaften.

Neben elektrischen Funktionseinheiten können auch nichtelektrische Elemente, z.B. Kanäle und Kammern zur Durchleitung oder Mischung fluidischer Medien oder Membranen oder mechanische Federn für die Druck- und Kraftmessung, ausgebildet werden.

Allen derartigen Anwendungen gemeinsam ist die Ausbildung der benötigten nichtelektrischen Funktionselemente mit den zur Verfügung stehenden dielektrischen Basisfolien. Da diese in Foliendicken von ca. 50 µm bis 250 µm zur Verfügung stehen, ist die herstellbare Strukturauflösung, d.h. die Miniaturisierung begrenzt.

So ist aus US 7,494,558 B1 ein Verfahren zur Herstellung von hohlen Keramikbauteilen bekannt, die mit einem Opfermaterial herstellbar sind.

WO 2013/030064 A1 betrifft die Herstellung von freigeformten aus Multimaterial gebildeten Mikrobauteilen.

Es ist daher Aufgabe der Erfindung, ein Verfahren zur Herstellung eines Bauteils aus keramischen Werkstoffen vorzuschlagen, mit dem die Bauteile weiter miniaturisiert werden können.

Ein erfindungsgemäßes Verfahren zur Herstellung eines Bauteils aus keramischen Werkstoffen weist die Merkmale des Anspruchs 1 auf. Vorteilhafte Ausgestaltungen und Weiterbildungen der Erfindung können mit in untergeordneten Ansprüchen bezeichneten Merkmalen realisiert werden.

Bei einem erfindungsgemäßen Verfahren zur Herstellung eines Bauteils aus keramischen Werkstoffen werden auf einen Grundkörper mehrere Schichten, die aus einem keramischen Werkstoff gebildet sind, jeweils in einer definierten Geometrie übereinander in Form einer Suspension oder Paste, in der pulverförmiger keramischer Werkstoff und mindestens ein Binder enthalten sind, mittels Siebdruck oder Schablonendruck aufgebracht. Dabei wird mindestens ein Bereich innerhalb mindestens einer Schicht mit definierter Dicke und Geometrie aus einem weiteren pulverförmigen Werkstoff, der bei einer thermischen Behandlung entfernbar ist und ebenfalls in Form einer Suspension oder Paste mittels Siebdruck oder Schablonendruck aufgebracht wird, ausgebildet.

Die keramischen Schichten können aus LTCC, HTCC, Aluminiumoxid, Zirkonoxid, mit Aluminiumoxid verstärktem Zirkonoxid (ATZ), mit Zirkonoxid verstärktem Aluminiumoxid (ZTA), Aluminiumnitrid und/oder Siliciumnitrid mit elektrisch isolierenden oder ionenleitenden Eigenschaften ausgebildet werden. Einen weiteren Werkstoff kann man auch als Opfermaterial bezeichnen.

In einer Alternative des erfindungsgemäßen Verfahrens können die Bereiche, in die dann ein weiterer Werkstoff eingebracht wird, innerhalb mindestens einer Schicht mit definierter Dicke und Geometrie z.B. durch Prägen und/oder Laserablation ausgebildet werden.

Auf und/oder in mindestens einer der keramischen Schichten können vor dem Aufbringen einer weiteren keramischen Schicht elektrisch funktionale Strukturen aus einem elektrisch oder halbleitenden Werkstoff aufgebracht und/oder ausgebildet werden. Die elektrisch funktionalen Strukturen können in Form von elektrischen Elektroden oder Leiterbahnen, elektrischen Widerständen und/oder Spulen- oder Kondensatoranordnungen ausgebildet werden.

Der Schichtaufbau wird bei einer thermischen Wärmebehandlung gesintert, wobei der weitere Werkstoff sowie die organischen Bestandteile entfernt (ausgebrannt) werden und mindestens ein Hohlraum mit definierten Abmaßen Breite, Länge, Höhe ausgebildet wird. Die Wärmebehandlung kann in einem Temperaturbereich von 500 °C bis 1800 °C durchgeführt werden.

Mit einem im Inneren des Bauteils ausgebildeten Hohlraum können Kanäle, Kammern, Membranen und/oder mechanischen Federn ausgebildet werden. Membranen können dabei mit lokal definiert angeordneten und definiert dimensionierten Verstärkungen und/oder Sicken ausgebildet werden.

Mit dem erfindungsgemäßen Verfahren können Schichten mit Dicken im Bereich 10 µm bis 50 µm, bevorzugt im Bereich 10 µm bis 20 µm ausgebildet werden.

Das Bauteil kann in einer Ausführungsvariante des erfindungsgemäßen Verfahrens mit Schichten aus unterschiedlichen keramischen Werkstoffen gebildet werden, wobei die keramischen Werkstoffe unterschiedliche thermische Ausdehnungskoeffizienten und/oder unterschiedliche Schwindmaße beim Sintern aufweisen. Dabei können die Schichten aus den unterschiedlichen keramischen Werkstoffen in einer definierten Reihenfolge, einer definierten Anzahl und einer definierten Dicke übereinander ausgebildet werden. Die eingesetzten keramischen Werkstoffe sollten dazu miteinander sinterbar sein und sich stoffschlüssig verbinden lassen. Durch den unterschiedlichen thermischen Ausdehnungskoeffizient der unterschiedlichen keramischen Werkstoffe und/oder ihr unterschiedliches Schwindmaß bei der zur Sinterung führenden Wärmebehandlung können gezielt Spannungen und Verformungen in das Bauteil eingebracht werden. Dadurch kann ein vorbestimmbares Verhalten des Bauteils bei einer definierten Temperaturänderung erreicht werden. Hierfür geeignete Werkstoffpaarungen sind z.B. verschiedene LTCC, Zirkonoxid / ATZ, ATZ/ ZTA.

Ein Bauteil, das mit dem erfindungsgemäßen Verfahren hergestellt wurde, kann als Drucksensor, Kraftsensor, Beschleunigungssensor, Mikropumpe, Membranventil, Mikroreaktoren, Mikromischer, elektrochemischer Sensor, Brennstoffzelle oder piezoelektrisches Aktor- und/oder Sensorelement eingesetzt werden.

Mit dem erfindungsgemäßen Verfahren können Schichtdicken von 10 µm bis 20 µm und damit eine Verdopplung der Strukturauflösung in der Dicke der Komponenten und damit auch in den lateralen Dimensionen gegenüber herkömmlichen Verfahren erreicht werden. Es können ortsaufgelöst sowohl subtraktiv als auch additiv strukturierte Einzelschichten ausgebildet werden. Das ermöglicht z.B. die hochgenau positionierte Verstärkung von Membranen oder Federn. Auch sind miniaturisierte und gestapelte, freitragende mechanische Elemente, wie Differenzdrucksensoren mit mechanischer Abstützung für eine erhöhte Überlastfestigkeit, ausbildbar. Es können so Wandelemente mit variierender Wandstärke genutzt werden. Mit dem erfindungsgemäßen Verfahren können außerdem in einfacher Weise Vias zwischen den elektrischen Funktionseinheiten der einzelnen Schichten ausgebildet werden.

Dabei können bekannte Standardstrukturen ergänzt und kombiniert, sowie bekannte kompatible Materialsysteme, beispielsweise zur Integration von Leiterbahnen, Dehnungs- und Temperatursensoren oder piezoelektrischen Sensoren genutzt werden. Zudem können mit dem Verfahren die Kosten zur Herstellung von Bauteilen aus keramischen Werkstoffen optimiert werden.

Nachfolgend soll die Erfindung anhand von Figuren näher erläutert werden. Dabei zeigen:
Figur 1 beispielhaft eine Ausführungsvariante des erfindungsgemäßen Verfahrens zur Herstellung eines Bauteils mit einer Membran auf einem Grundkörper,
Figur 2 beispielhaft eine weitere Ausführungsvariante zur Herstellung eines Bauteils mit einer Membran auf einem Grundkörper,
Figur 3 eine Ausführungsvariante zur Herstellung eines Differenzdrucksensors,
Figur 4 beispielhaft die Herstellung eines Bauteils mit einer partiell verstärkten Membran,
Figur 5 beispielhaft die Herstellung eines Bauteils mit einer gesickten Membran.

Zur Herstellung eines Bauteils mit dem erfindungsgemäßen Verfahren werden auf einen Grundkörper 1 aus LTCC oder HTCC eine oder mehrere Schichten eines Opfermaterials in Form einer Paste oder Suspension mittels Sieb- oder Schablonendruck mit einer Schichtdicke von 10 µm - 50 µm übereinander aufgebracht und danach getrocknet. Die Paste oder Suspension wird z.B. mit Aceton, Methylethylketon (MEK), MEK/Ethanol, MEK/Toluol/ Cyclohexanol, N-Methyl-2-pyrrolidon (NMP), Wasser als Lösungsmittel und z.B. Epoxidharz, Polyvinylalkohol (PVA), Polyvinylbutyral (PVB), Polyvinylidenfluorid (PVDF), Alginate, Acrylate, Cellulosen, UV-härtende Systeme als Binder gebildet.

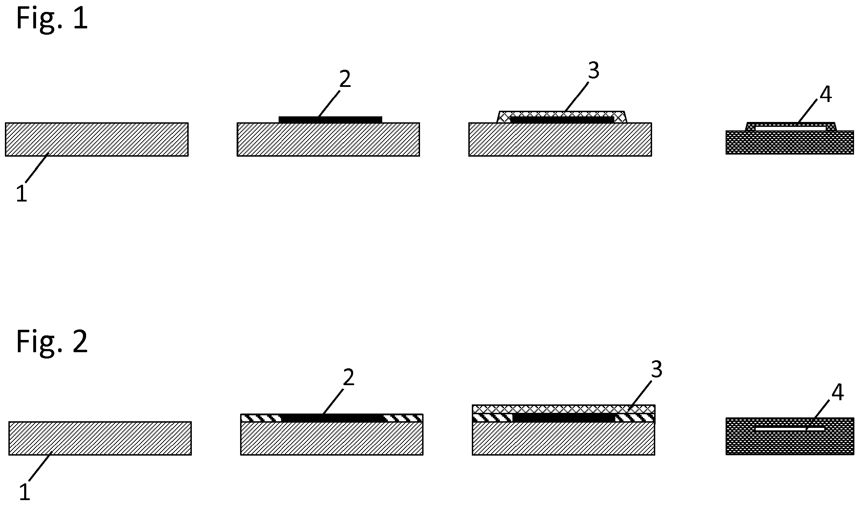

Figur 1 zeigt, wie nach Erreichen einer vorgegebenen Dicke des Opferschichtaufbaus eine runde oder quadratische Schicht 3, die kleiner oder gleich groß als die Grundfläche des Bauteils ist, aus LTCC/ HTCC als weiterem Werkstoff aufgebracht wird. Die keramischen Feststoffe (LTCC/ HTCC) dieser Paste oder Suspension haben einen Volumenanteil von 30 % - 65% und eine Partikelgröße im Bereich von 0,2 µm und 5 µm. Als Lösungsmittel/ Bindergemische werden Grundkörper-kompatible Binder-/ Lösungsmittelgemische (Binder: Lösungsmittel: Aceton, MEK, MEK/ Ethanol, MEK/ Toluol/ Cyclohexanol, NMP, Wasser) mit einem Anteil von 35 Vol% - 70 Vol% verwendet, in einer Paste oder Suspension aufbereitet und mittels Sieb- oder Schablonendruck mit einer Schichtdicke von 15 µm - 50 µm auf den Schichtaufbau aufgebracht und danach getrocknet.

Darauf wiederum werden elektrisch funktionale Strukturen in Form von elektrischen Leiterbahnen und elektrischen Widerständen auf die zuletzt aufgebrachte keramische Schicht in Form einer Paste oder Suspension mittels Sieb- oder Schablonendruck aufgebracht. Dazu wurden Pasten oder Suspensionen mit den o.g. Binder-Lösungsmittelgemischen und einem Anteil von 30 Vol% - 65 Vol% funktioneller Partikel, z.B. Ag, AgPd, AgPt, Au, Pt, Ni, Cu; Gläser, RuO₂, Ruthenate, und einer Partikelgröße im Bereich von 0,2 µm bis 5 µm gebildet.

Anschließend wird der gesamte Schichtaufbau bei einer Temperatur im Bereich von 500 °C bis 1800°C gesintert. Dabei wird das Opfermaterial als weiterer Werkstoff entfernt und es wird ein Hohlraum 4 ausgebildet. Das Bauteil kann so als Drucksensor oder als Membranventil eingesetzt werden.

Figur 2 zeigt eine alternative Ausführungsvariante des erfindungsgemäßen Verfahrens. Die mit dem benötigten Opfermaterial aufzufüllenden quadratischen oder runden Bereiche werden mittels Komplementärdruck einer HTCC/ LTCC- Paste oder Suspension mittels Sieb- oder Schablonendruck aufgebracht oder mittels Laserablation aus dem Grundkörper geschaffen.

Anschließend wird in diesen Bereich mittels Sieb- oder Schablonendruck des Opfermaterials als weiterem Werkstoff in Form einer Paste oder Suspension, die wie bei dem Beispiel nach Figur 1 gebildet wird, mit einer Schichtdicke von 10 µm - 50 µm aufgebracht. Darüber werden 1-3 Schichten der LTCC/ HTCC-Suspension oder Paste mit einer Schichtdicke von 10 µm - 50 µm µm und darauf elektrisch funktionale Strukturen in Form von elektrischen Leiterbahnen und elektrischen Widerständen, wie bei dem Beispiel nach Figur 1 beschrieben, aufgebracht.

Anschließend wird der Schichtaufbau bei einer Temperatur im Bereich von 500 °C - 1800 °C gesintert. Dabei wird das Opfermaterial als weiterer Werkstoff entfernt und es wird ein Hohlraum 4 ausgebildet.

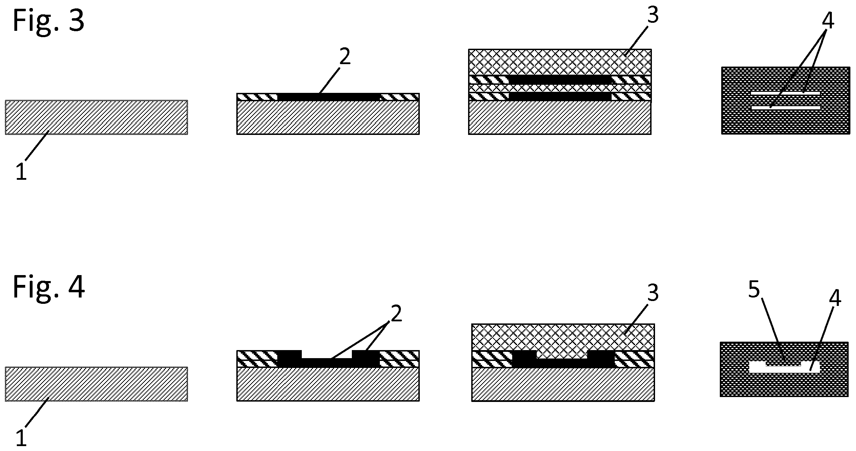

Figur 3 zeigt beispielhaft die Herstellung eines Differenzdrucksensors. Auf ein Bauteil, wie es zu Figur 2 beschrieben ist, werden nacheinander weitere Schichten aus Opfermaterial oder LTCC/ HTCC in Form einer Paste oder Suspension mittels Sieb- oder Schablonendruck aufgebracht.

Beim anschließenden Sintern bei Temperaturen im Bereich von 500 °C - 1800 °C wird das Opfermaterial als weiterer Werkstoff entfernt und es werden zwei Hohlräume 4 ausgebildet.

Eine Membran, wie sie in den Beispielen zu Figur 1 oder Figur 2 beschrieben ist, kann auch partiell verstärkt werden. Figur 4 zeigt, dass zunächst auf einen Grundkörper 1 aus LTCC/ HTCC wie bereits beschrieben mehrere Schichten aus LTCC/ HTCC mit einer Schichtdicke von 20 µm - 50 µm aufgebracht werden. Diese Schichten werden dabei mittels Sieb- oder Schablonendruck so aufgebracht, dass sie eine runde oder quadratische Aussparung an der Oberfläche des Bauteils bilden, in die mittels Schablonendruck Schichten 2 aus Opfermaterial als weiterem Werkstoff eingebracht werden. In den darüber angeordneten ein bis zwei Schichten 3 werden mittels Sieb- oder Schablonendruck zunächst weitere Schichten aus Opfermaterial mit einer Schichtdicke von 10 µm - 20 µm aufgebracht, die die ausgebildete Aussparung an der Oberfläche des Mehrschichtaufbaus freilassen. Anschließend werden ein bis zwei Schichten 3 mittels Sieb- oder Schablonendruck so aufgebracht, dass die Aussparung ausgefüllt ist. Darüber werden ein bis zwei Schichten 3 LTCC/ HTCC mit einer Schichtdicke von 10 µm - 50 µm aufgebracht. Darüber werden, wie bereits beschrieben, elektrisch funktionale Strukturen in Form von elektrischen Leiterbahnen und elektrischen Widerständen aufgebracht.

Danach wird der Schichtaufbau bei Temperaturen im Bereich von 500 °C - 1800 °C gesintert und dabei das Opfermaterial als weiterer Werkstoff entfernt. Es entsteht ein Bauteil mit einer Membran, die an einer vorgegebenen Position verstärkt ist. Die Verstärkung 5 der Membran dient der Verteilung mechanischer Spannungen. Das Bauteil kann beispielsweise als Druck-, Kraft- oder Beschleunigungssensor eingesetzt werden.

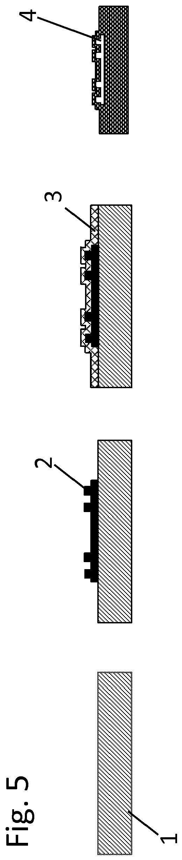

Figur 5 zeigt beispielhaft die Herstellung einer gesickten Membran.

Auf einen Grundkörper 1 aus LTCC/ HTCC werden wie bei dem Beispiel nach Figur 1 mehrere Schichten aus Opfermaterial mit einer Schichtdicke von 10 µm - 50 µm in Form einer Paste oder Suspension mittels Sieb- oder Schablonendruck aufgebracht. Darauf werden ein bis zwei kreisförmige Schichten 2 aus demselben Opfermaterial mit einer Schichtdicke von 10 µm - 20 µm in Form einer Paste oder Suspension mittels Sieb- oder Schablonendruck aufgebracht, so dass an definierten Positionen der Schichten 2 als kreisförmige Erhebungen (Sicken) ausgebildet werden. Darüber werden ein bis zwei Schichten 3 aus LTCC/ HTCC mit einer Schichtdicke von 10 µm - 50 µm mittels Siebdruck aufgebracht. Darauf werden, wie bereits beschrieben, elektrisch funktionale Strukturen in Form von elektrischen Leiterbahnen und elektrischen Widerständen aufgebracht.

Anschließend wird der Schichtaufbau bei Temperaturen im Bereich von 500 °C - 1800 °C gesintert und das Opfermaterial als weiterer Werkstoff entfernt. Es entsteht ein Hohlraum 4. Ein solches Bauteil kann bevorzugt als Drucksensor eingesetzt werden.

## Patentansprüche

1. Verfahren zur Herstellung eines Bauteils aus keramischen Werkstoffen, bei dem
auf einen Grundkörper (1) mehrere Schichten, die aus einem keramischen Werkstoff gebildet sind, jeweils in einer definierten Geometrie übereinander, in Form einer Paste oder Suspension in der pulverförmiger keramischer Werkstoff und mindestens ein Binder enthalten sind, mittels Sieb- oder Schablonendruck aufgebracht werden, und dabei mindestens ein Bereich innerhalb mindestens einer Schicht (2) mit definierter Dicke und Geometrie aus einem weiteren Werkstoff, der bei einer thermischen Behandlung entfernbar ist und ebenfalls in Form einer Paste oder Suspension mittels Sieb- oder Schablonendruck aufgebracht wird, ausgebildet wird, und
auf und/oder in mindestens eine der keramischen Schichten vor dem Aufbringen einer weiteren keramischen Schicht elektrisch funktionale Strukturen aus einem elektrisch oder halbleitenden Werkstoff aufgebracht und/oder ausgebildet werden, und
der Schichtaufbau bei einer thermischen Wärmebehandlung gesintert wird, wobei der weitere Werkstoff entfernt und mindestens ein Hohlraum (4) mit definierten Abmaßen Breite, Länge, Höhe ausgebildet wird.

2. Verfahren nach Anspruch 1, **dadurch gekennzeichnet, dass** die keramischen Schichten aus LTCC, HTCC, Al₂O₃, ZrO₂, Aluminiumoxid verstärktes Zirkonoxid (ATZ), Zirkonoxid verstärktes Aluminiumoxid (ZTA), AIN und/oder Si₃N₄ ausgebildet werden.

3. Verfahren nach einem der vorhergehenden Ansprüche, **dadurch gekennzeichnet, dass** die Schichten des Bauteils in einer definierten Reihenfolge, einer definierten Anzahl und einer definierten Dicke jeweils aus unterschiedlichen keramischen Werkstoffen gebildet werden, wobei die unterschiedlichen keramischen Werkstoffe unterschiedliche thermische Ausdehnungskoeffizienten und/oder unterschiedliche Schwindmaße beim Sintern aufweisen und miteinander sinterbar sind.

4. Verfahren nach Anspruch 1 oder 2, **dadurch gekennzeichnet, dass** als weiterer Werkstoff Epoxidharz, Polyvenylalkohol (PVA), Polyvenylbutyral (PVB), Polyvenylidenfluorid (PVDF), Alginate, Acrylate, Cellulosen oder UV-härtende Systeme eingesetzt wird.

5. Verfahren nach einem der vorhergehenden Ansprüche, **dadurch gekennzeichnet, dass** die Wärmebehandlung in einem Temperaturbereich von 500 °C bis 1800 °C durchgeführt wird.

6. Verfahren nach einem der vorhergehenden Ansprüche, **dadurch gekennzeichnet, dass** Bereiche, in die ein weiterer Werkstoff eingebracht wird, innerhalb mindestens einer Schicht mit definierter Dicke und Geometrie durch Prägen und/oder Laserablation ausgebildet werden.

7. Verfahren nach einem der vorhergehenden Ansprüche, **dadurch gekennzeichnet, dass** elektrisch funktionale Strukturen in Form von elektrischen Elektroden oder Leiterbahnen, elektrischen Widerständen und/oder Spulen- und/oder Kondensatoranordnungen ausgebildet werden.

8. Verfahren nach einem der vorhergehenden Ansprüche, **dadurch gekennzeichnet, dass** mit im Inneren des Bauteils ausgebildeten Hohlräumen (4) Kanäle, Kammern, Membranen und/oder mechanischen Federn ausgebildet werden.

9. Verfahren nach einem der vorhergehenden Ansprüche, **dadurch gekennzeichnet, dass** Membranen mit lokal definiert angeordneten und definiert dimensionierten Verstärkungen und/oder Sicken ausgebildet werden.

10. Verfahren nach einem der vorhergehenden Ansprüche, **dadurch gekennzeichnet, dass** Schichten mit Dicken im Bereich 10 µm bis 50 µm, bevorzugt im Bereich 10 µm bis 20 µm ausgebildet werden.

## Claims

1. A method for producing a component from ceramic materials, wherein
a plurality of layers, which are made of a ceramic material, are in each case applied in a defined geometry on top of one another, in the form of a paste or suspension containing powdery ceramic material and at least one binder, are applied to a base body (1) by means of screen or stencil printing, and at least one region having a defined thickness and geometry is created within at least one layer (2) from a further material that can be removed in a thermal treatment and is likewise applied in the form of a paste or suspension by means of screen or stencil printing, and
before a further ceramic layer is applied, electrically functional structures made of an electrically conducting or semiconducting material are applied to and/or created in at least one of the ceramic layers, and
the layer structure is sintered in a thermal heat treatment, the further material being removed and at least one hollow space (4) having defined dimensions, width, length, and height being created.

2. The method according to claim 1, **characterized in that** the ceramic layers are made from LTCC, HTCC, Al₂O₃, ZrO₂, alumina toughened zirconia (ATZ), zirconia toughened alumina (ZTA), AIN and/or Si₃N₄.

3. The method according to any one of the preceding claims, **characterized in that** the layers of the component are formed in a defined order, in a defined number and in a defined thickness, in each case from different ceramic materials, the different ceramic materials having different thermal coefficients of expansion and/or different degrees of shrinkage during sintering and being sinterable with one another.

4. The method according to claim 1 or 2, **characterized in that** epoxy resin, polyvinyl alcohol (PVA), polyvinyl butyral (PVB), polyvinylidene fluoride (PVDF), alginates, acrylates, celluloses or UV-hardening systems is used as the further material.

5. The method according to any one of the preceding claims, **characterized in that** the thermal treatment is carried out in a temperature range from 500°C to 1800°C.

6. The method according to any one of the preceding claims, **characterized in that** regions into which a further material is introduced are created within at least one layer with a defined thickness and geometry by stamping and/or laser ablation.

7. The method according to any one of the preceding claims, **characterized in that** electrically functional structures are created in the form of electrical electrodes or conductive tracks, electrical resistors and/or coil and/or capacitor systems.

8. The method according to any one of the preceding claims, **characterized in that** passages, chambers, membranes and/or mechanical springs are created with hollow spaces (4) created in the interior of the component.

9. The method according to any one of the preceding claims, **characterized in that** membranes having reinforcements and/or beads arranged in a locally defined manner and dimensioned in a defined manner are created.

10. The method according to any one of the preceding claims, **characterized in that** layers having thicknesses in the range of 10 µm to 50 µm, preferably in the range of 10 µm to 20 µm, are created.

## Revendications

1. Procédé de fabrication d'un composant en matériaux céramiques, dans lequel
plusieurs couches, qui sont formées d'un matériau céramique, sont superposées sur un corps de base (1) dans une géométrie définie, sous forme de pâte ou de suspension dans laquelle sont contenus un matériau céramique pulvérulent et au moins un liant, sont appliquées par sérigraphie ou au pochoir, et au moins une zone à l'intérieur d'au moins une couche (2) avec une épaisseur et une géométrie définies, en un autre matériau qui peut être retiré lors d'un traitement thermique et qui est également appliqué sous forme de pâte ou de suspension par sérigraphie ou impression au pochoir, et
des structures électriquement fonctionnelles en un matériau électrique ou semi-conducteur sont appliquées et/ou formées sur et/ou dans au moins l'une des couches céramiques avant l'application d'une autre couche céramique, et
la structure en couches est frittée lors d'un traitement thermique, l'autre matériau étant éliminé et au moins un espace creux (4) ayant des dimensions définies en largeur, longueur, hauteur étant formé.

2. Procédé selon la revendication 1, **caractérisé en ce que** les couches céramiques sont formées de LTCC, HTCC, Al₂O₃, ZrO₂, zircone renforcée à l'alumine (ATZ), alumine renforcée à la zircone (ZTA), AIN et/ou Si₃N₄.

3. Procédé selon l'une quelconque des revendications précédentes, **caractérisé en ce que** les couches du composant sont formées dans un ordre défini, un nombre défini et une épaisseur définie, respectivement à partir de différents matériaux céramiques, les différents matériaux céramiques présentant des coefficients de dilatation thermique différents et/ou des valeurs de retrait différentes lors du frittage et pouvant être frittés ensemble.

4. Procédé selon la revendication 1 ou 2, **caractérisé en ce que** l'on utilise comme autre matériau de la résine époxy, du poly(alcool vinylique) (PVA), du poly(butyral de vinyle) (PVB), du poly(fluorure de vinylidène) (PVDF), des alginates, des acrylates, des celluloses ou des systèmes durcissant aux UV.

5. Procédé selon l'une quelconque des revendications précédentes, **caractérisé en ce que** le traitement thermique est réalisé dans une plage de températures allant de 500 °C à 1800 °C.

6. Procédé selon l'une quelconque des revendications précédentes, **caractérisé en ce que** des zones dans lesquelles un autre matériau est introduit sont formées à l'intérieur d'au moins une couche d'épaisseur et de géométrie définies par estampage et/ou par ablation au laser.

7. Procédé selon l'une quelconque des revendications précédentes, **caractérisé en ce que** des structures électriquement fonctionnelles sont formées sous la forme d'électrodes électriques ou de pistes conductrices, de résistances électriques et/ou d'agencements de bobines et/ou de condensateurs.

8. Procédé selon l'une quelconque des revendications précédentes, **caractérisé en ce que** des canaux, des chambres, des membranes et/ou des ressorts mécaniques sont formés avec des espaces creux (4) formés à l'intérieur du composant.

9. Procédé selon l'une quelconque des revendications précédentes, **caractérisé en ce que** des membranes sont formées avec des renforts et/ou des moulures disposés localement de manière définie et dimensionnés de manière définie.

10. Procédé selon l'une quelconque des revendications précédentes, **caractérisé en ce que** des couches d'une épaisseur de l'ordre de 10 µm à 50 µm, de préférence de l'ordre de 10 µm à 20 µlm, sont formées.
